# EUROPEAN PATENT SPECIFICATION

(11) **EP 2 591 926 B1**
(45) Date of publication and mention of the grant of the patent: **03.02.2016**
(21) Application number: 12189706.0
(22) Date of filing: 24.10.2012
(51) Int. Cl.: B60D 1/46, B60D 1/00

(54) **Connecting apparatus for towing vehicles**
Verbindungsvorrichtung für Zugfahrzeuge
Dispositif de liaison pour véhicules tracteurs

(30) Priority: 11.11.2011 IT MI20112056
(43) Date of publication of application: 15.05.2013
(73) Proprietor: V. Orlandi S.p.A., 25020 Flero BS (IT)
(72) Inventor: Grassi, Luigi, 25020 Flero (Brescia) (IT)
(74) Representative: Tansini, Elio Fabrizio

(56) References cited:
- EP-A1- 0 016 317
- US-A- 3 708 183

## Description

This invention relates to a connecting apparatus for towing vehicles. More specifically, the apparatus is designed to support a hook on a towing vehicle, and to facilitate the connection of a trailer to the vehicle. This function is particularly useful for tractors and similar agricultural vehicles, but the apparatus according to this invention can also be used on other types of work vehicles.

A prior art connecting apparatus for towing vehicles is connectable to the rear part of the vehicle, and is designed to support a hook connected to the trailer to be towed.

More in detail, the apparatus comprises a pair of uprights facing each other, and connected by a pair of crosspieces so as to form a rigid frame.

A slide is positioned between the uprights, and supports the above-mentioned hook. In order to vary the height of the hook, the slide is slidable along a vertical direction, more specifically along a pair of guides formed on the uprights. Locking means are associated with the slide, and allow it to be locked on the guide in a plurality of predetermined positions which can be selected by an operator.

In order to connect a trailer, the operator, operating on a special handle, deactivates the locking means and moves the slide along the uprights until they are positioned at an adequate height depending on the trailer to be connected. The locking means are then reactivated, so as to fix the slide in position. Once the hook is stabilised, the trailer can be connected. Disadvantageously, the above-mentioned operations are performed by the operator using only muscular force for operating a lever to lift the slide or support it during lowering. Considering that the slide can reach a weight of 40 kg, it is easy to understand that these operations are difficult and can easily result in injury for the operator.

An attempt has been made to overcome these problems by interposing an elastic system between the uprights and the slide, so as to facilitate the movement of the latter by compensating at least partly the weight. For example, patent document EP1312491 proposes the use of pneumatic springs. US 3,708,183 discloses the preamble of claim 1 and provides use of coil compression springs. However, according to the Applicant, these prior art systems can be improved with regard to the efficiency, constructional simplicity and reliability over time.

More specifically, according to this invention, the Applicant understood that in order to achieve an efficient simplification of the operations for adjusting the height of the slide it is necessary to actuate an action for opposing the weight of it, and of the elements carried by it, which is almost constant irrespective of the position occupied by the slide along the uprights. The current elastic compensation systems are no able to satisfy this need. On the contrary, the extent of the elastic reaction produced by them varies significantly as a function of the position occupied by the slide along the uprights, correspondingly with the different degree of deformation induced in the elastic elements with the variation of the position of the slide.

In this context, the technical purpose which forms the basis of this invention is to propose a connecting apparatus for towing vehicles which overcomes the above mentioned disadvantages of the prior art.

More specifically, the aim of this invention is to provide a connecting apparatus for towing vehicles capable of making the regulation of the height of the hook easier and safer.

The technical purpose indicated and the aims specified are substantially achieved by a connecting apparatus for towing vehicles comprising the technical features described in one or more of the appended claims.

Further features and advantages of the invention are more apparent in the detailed description below, with reference to a preferred, non-limiting, embodiment of a connecting apparatus for towing vehicles as illustrated in the accompanying drawings, in which:

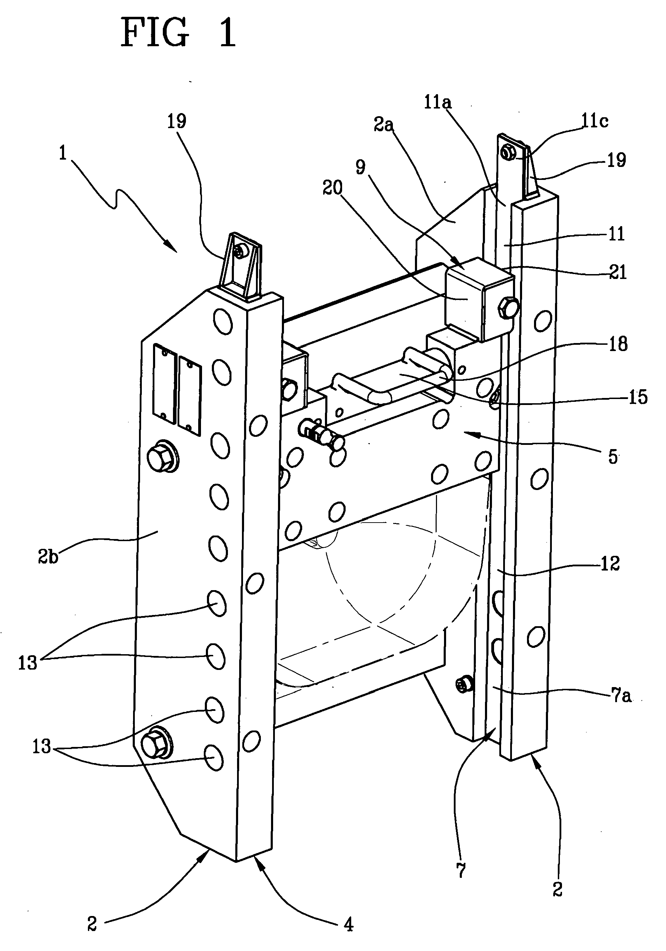

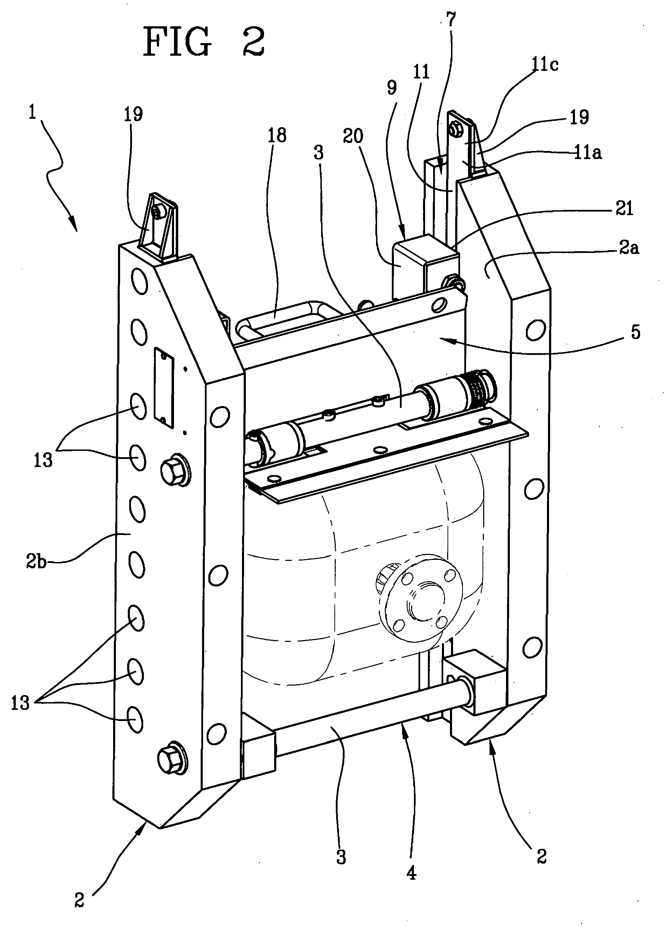

- Figures 1 and 2 are perspective views of a connecting apparatus for towing vehicles according to this invention; and
- Figure 3 is a cross section of a detail of the apparatus of Figures 1 and 2.
- Figure 4 is an interrupted view of a possible alternative embodiment of the invention;
- Figure 5 is an interrupted view of a further alternative embodiment of the invention;
- Figure 6 shows a tape spring used in the alternative embodiment of Figure 5.

With reference to the accompanying drawings, the numeral 1 indicates a connecting apparatus for towing vehicles according to this invention.

The apparatus comprises a pair of uprights 2 facing each other. More specifically, the uprights each have an inner surface 2a facing the other upright 2. Moreover, each upright 2 has an outer surface 2b opposite the inner surface 2a. The uprights 2 are connected by one or more crosspieces 3, together with which they form a frame 4.

The apparatus 1 also comprises a slide 5. The slide 5 is positioned between the uprights 2, and is fixable to a hook (not illustrated). The slide 5 is designed to support the hook and allow the connection between the vehicle and the trailer.

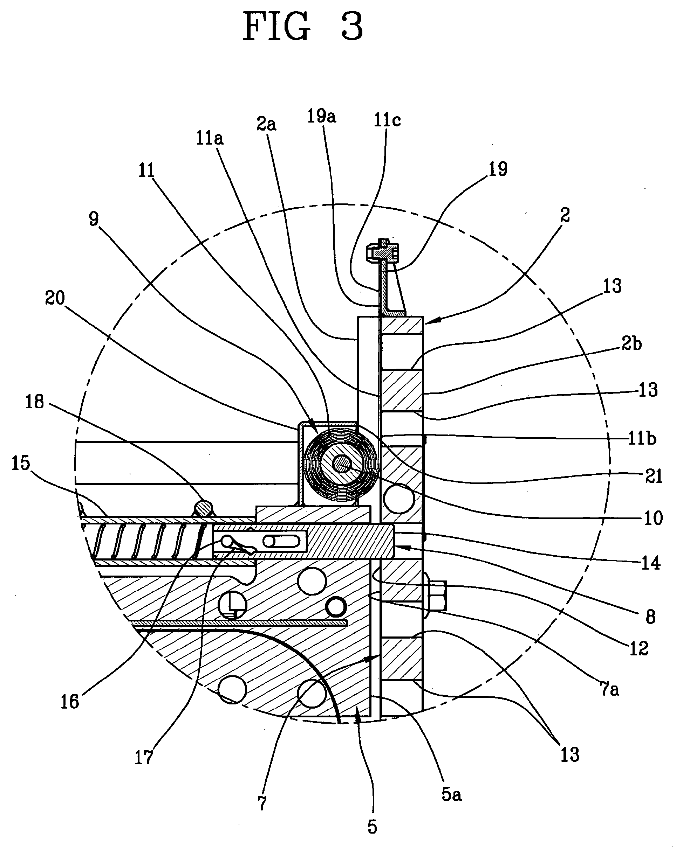

In order to vary the height of the hook, the slide 5 is movable along at least one direction of sliding which is substantially vertical, or has a vertical component. More specifically, the slide 5 is slidable along at least one guide 7 connected to the frame 4. More specifically, the apparatus 1 comprises a pair of guides 7 formed on the uprights 2. With reference in particular to Figure 3, each guide 7 is substantially formed by a recess or groove 12 with rectilinear extension, formed directly on the respective upright 2, in particular at the inner surface 2a. It should be noted that the slide 5 has two end portions 5a which slide inside the uprights 2 and, more specifically, inside the respective guides 7.

The apparatus 1 also comprises locking means 8 associated with the slide 5. The locking means 8 are designed to lock the slide 5 in a plurality of positions on the guides 7.

More in detail, each upright 2 has a plurality of holes 13, positioned in particular along the groove 12 which forms the guide 7. Each hole 13 is positioned at the same height as a similar hole 13 made on the opposite upright 2.

A pair of pins 14 is carried by the slide, and each pin 14 is associated with a respective upright 2 for being selectively inserted in one of the holes 13 made on that upright 2. More in detail, each pin 14 is slidably guided relative to the slide 5, and switchable between a locking position in which it is inserted in a hole 13 for locking the slide 5 and a release position in which it is disengaged from the hole 13 and retracted on the slide 5, allowing them to slide in the guides 7.

The slide 5 can be associated with a hollow case 15 inside of which the pins 14 are partly inserted. The case 15 has, in particular, a cylindrical tubular shape, and can rotate about a relative axis for controlling the movement of the pins 14, for example by means of respective pegs 16, integral with the case 15 and slidable inside helical slots 17 made on the pins 14. By rotating the case 15, more specifically by using a handle 18 fixed to it, the pegs 16 slide inside the slots 17 and switch the pins 14 between the locked and released positions.

According to this invention, the apparatus 1 comprises at least one torsion spring 9, preferably of the tape type connected to the frame 4 and to the slide 5. Advantageously, the spring 9 allows the weight of the slide 5 to be balanced, allowing movement along the uprights 2 with much reduced efforts by the operator. More specifically, the apparatus 1 comprises a pair of torsion springs 9, each associated with a relative guide 7.

More in detail, each torsion spring 9 comprises a winding core 10 about which a tape 11, for example made of steel, is wound, having an inner surface and an outer surface 11b opposite the inner surface 11a. The torsion spring 9 tends to adopt and maintain a rest state wherein the tape 11 is wound in a spiral in such a way that the successive turns or layers of tape 11 are in direct contact with each other. In other words, when the tape 11 is wound on the winding core 10 the inner surface 11a of a turn of tape 11 is in contact with an outer surface 11b of the adjacent turn.

The torsion spring 9 also comprises a cover 20 connected to the winding core 10. The cover 20 is designed to contain the tape 11 protecting it from contact with foreign bodies when it is wound about the winding core 10. Moreover, the cover 20 has an opening 21 for allowing the unwinding of the tape 11.

According to a possible embodiment not illustrated, the torsion spring 9 is fixed to the upright 2 at the inner surface 2a. More specifically, the winding core 10 of the torsion spring 9 is rotatably fixed to the inner surface 2a of the upright 2. Alternatively, the torsion spring 9, and in particular the winding core 10, can be fixed to the upright 2 at the inner surface 2b. According to another embodiment of this invention, illustrated in the accompanying drawings, the torsion spring 9 is rotatably engaged with the slide 5. More specifically, the winding core 10 is rotatably engaged in the cover 20, in turn fixed to the slide 5. In this case, the tape 11 has an end 11c fixed relative to the upright 2.

More in detail, the apparatus 1 comprises a pair of connecting tabs 19, each fixed to the top of a respective upright 2. The end 11c of each tape 11 is advantageously fixable to one of the tabs 19, which has a contact surface 19a in contact with the tape 11 and in particular with its outer surface 11b. The contact surface 19a of the tab 19 extends advantageously without interruption with respect to the inner surface 7a of the guide, in such a way as to extend the tape 11 uniformly during its unwinding.

In effect, it should be noted that, as shown by way of an example in Figure 3, the tape 11 is unwindable along the inside of the groove 12 forming the respective guide 7, more specifically entering progressively in contact with an inner surface 7a of the guide 7. More in detail, the tape 11 is unwound following a lowering movement of the slide 5. In this way, the unwinding of the tape provides an elastic reaction which opposes the lowering of the slide 5, balancing the weight totally or even only partly.

Advantageously, the constructional features of the torsion springs 9 described above are such that the elastic reaction provided by the unwinding of the tape has a practically constant value along the entire stroke of the slide 5 from the highest position to the lowest position along the uprights 2.

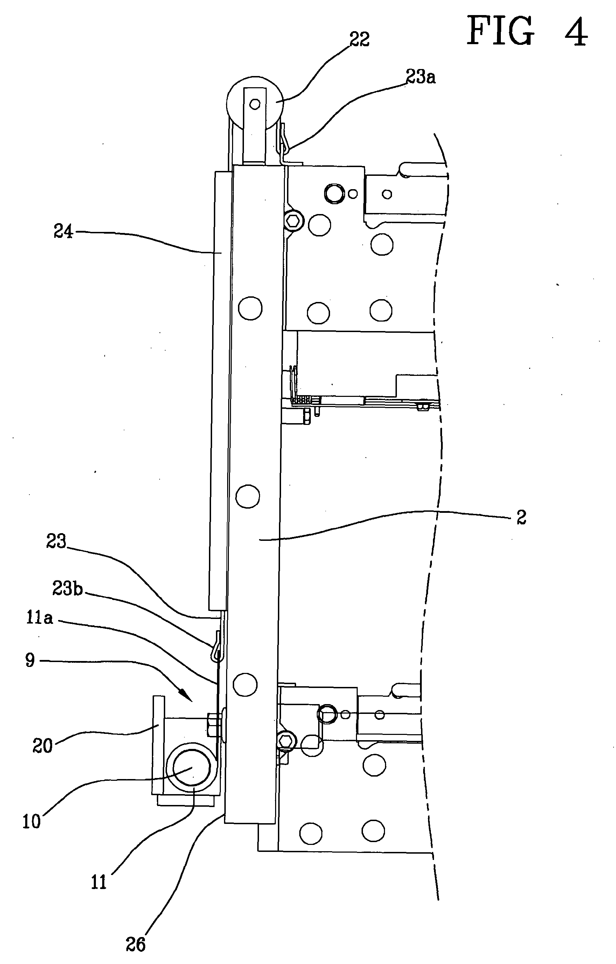

In a possible alternative embodiment, illustrated in Figure 4, each torsion spring 9 is preferably applied against the outer surface 2b of the respective upright 2, for example close to the lower end of the upright. An idler pulley 22 can be prepared on the relative upright 2, preferably at the top of it, for returning a connecting cable 23 having a first end connected to the slide 5, and a second end 23b connected to the end 11a of the tape 11. The lowering of the slide 5 along the uprights 2 determines the pulling of the connecting cable 23 and, consequently, the unwinding of the tape 11 from the winding core 10. A protective structure 24 can be fixed to the outer surface 2b of the upright for protecting and/or guiding the connecting cable 23 and/or the tape 11 during winding and unwinding.

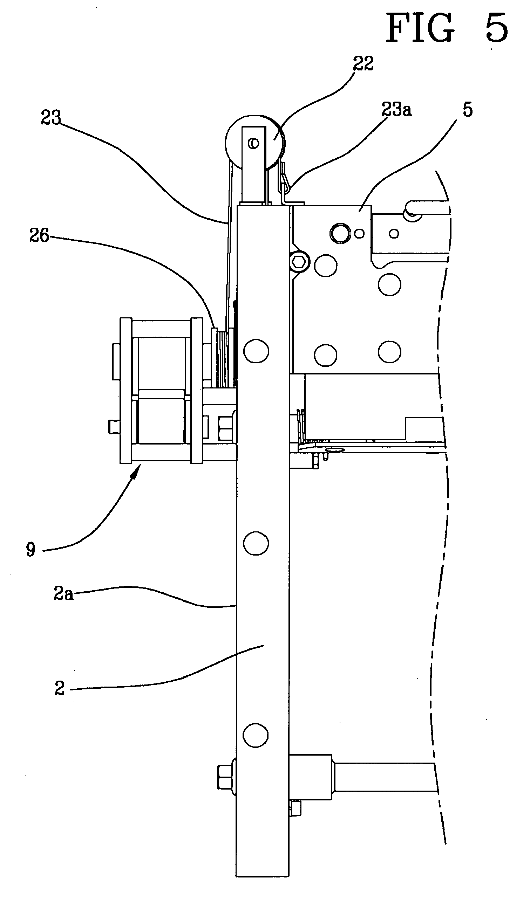

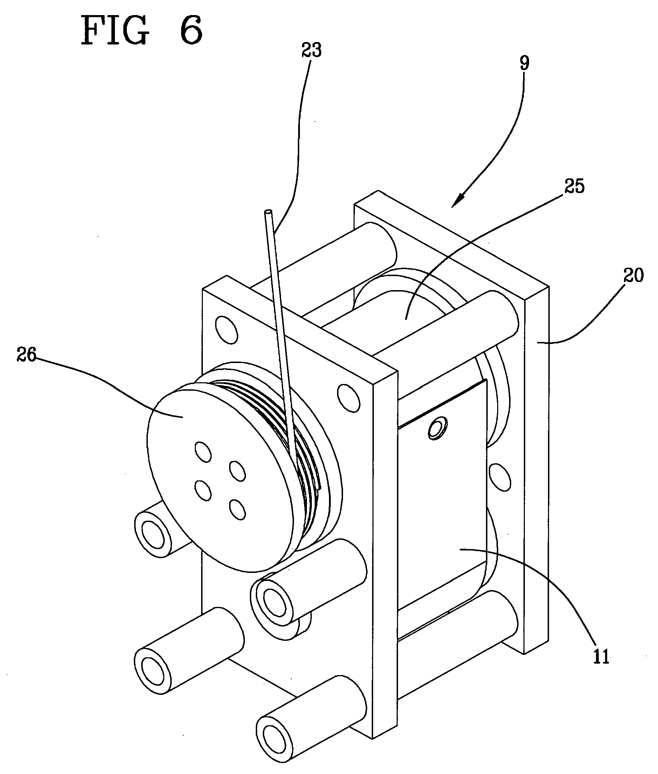

According to a further embodiment, illustrated in Figures 5 and 6, each torsion spring 9 also comprises an auxiliary winding core 25, positioned parallel alongside the winding core 10 and having a greater diameter than the latter. The tape 11 unwound from the winding core 10 winds onto the auxiliary winding core 25. However, the internal tensions induced by the shape memory of the tape 11 are such that the tape constantly tends to unwind from the auxiliary winding core 25 for winding on the winding core 10.

An idler pulley 22 can be prepared on the relative upright 2, preferably at the top of it, for returning a connecting cable 23 having a first end 23a connected to the slide 5.

On the opposite side to the first end 23a, the connecting cable 23 is preferably wound on a return pulley 26 rotationally integral with one of the winding cores 10, 25, preferably with the auxiliary winding core 25. The lowering of the slide 5 along the uprights 2 determines the pulling of the connecting cable 23 and, consequently, the unwinding of the tape 11 from the winding core 10 and the winding of it on the auxiliary winding core 25, rotationally driven by the return pulley 26.

This embodiment is advantageously used when it is not possible to fix the torsion spring 9 in the lower part of the upright 2.

In effect, as shown by way of example in Figure 5, the torsion spring 9 is suitable for being applied against the outer surface 2b of the respective upright 2, even close to the top of the upright.

The embodiment of Figure 4, as an alternative to the use of the auxiliary winding core, could use a tape 11 extending around the winding core 10 according to radially spaced turns, forming for example an Archimedes spiral. In this case, the return pulley 26 will be integral with the winding core 10. This type of spring has a less constant elastic reaction compared with that of the other embodiments, but can prove advantageous for the structural simplification of the apparatus and for the costs.

Alternative embodiments, not illustrated, are possible with, for example, a plurality of torsion springs 9 associated with a single upright 2. In other words, it is possible to connect various springs 9 in parallel. This invention achieves the set aim. In effect, the torsion spring allows the weight of the slide to be balanced providing a substantially constant force, regardless of the position occupied by the slide along the guides 7. This makes the movement of the slide very easy, making the adjustment of the height of the hook much easier and at the same time safer for the operator. The invention also has other advantages. More specifically, the extremely small dimensions of the spring also allow the installation in the space between the uprights, thereby reducing the overall size. Moreover, if the spring slides inside the guide, undesired deformations and lateral movements of the tape are prevented, thereby improving the performance of the spring.

A further advantage of this invention can be obtained by fixing the springs outside the uprights. In this way the distance between the uprights is further reduced.

## Claims

1. A connecting apparatus (1) for towing vehicles, comprising a frame (4) comprising a pair of uprights (2); a pair of guides (7) each associated with a relative upright (2); a slide (5) that slides along the guides (7) for moving at least along a substantially vertical direction of sliding, the slide (5) being fixable to a hook for connecting a trailer; locking means (8) associated with the slide (5) for locking it in a plurality of positions along the guides (7); **characterised in that** it comprises at least one torsion spring (9) connected to the frame (4) and to the slide (5) for balancing the weight of the slide (5), wherein the torsion spring (9) comprises a winding core (10) and a tape (11) wound around the winding core (10), wherein
the tape (11) may be unwound from the winding core (10) for retaining the slide (5) with a substantially constant elastic recall force.

2. The apparatus (1) according to the preceding claim, **characterised in that** the tape (11) has an inner surface (11a) and an outer surface (11b) opposite the inner surface (11a), the inner surface (11a) being in contact with the outer surface (11b) when the tape (11) is wound on the winding core (10).

3. The apparatus (1) according to any of the foregoing claims, **characterised in that** the torsion spring (9) comprises a cover (20) connected to the winding core (10) containing the tape (11) when it is wound around the winding core (10), the cover (20) having an opening (21) for allowing the unwinding of the tape (10).

4. The apparatus (1) according to any of the foregoing claims, wherein at least one of the guides has a groove (12), **characterised in that** the tape (11) unwound inside the groove (12) following a lowering movement of the slide (5).

5. The apparatus (1) according to any of the foregoing claims, **characterised in that** it comprises a pair of said springs (9) each torsion spring (9) being associated with a relative guide (7).

6. The apparatus according to claim 5, **characterised in that** it comprises a plurality of torsion springs (9) associated with a single guide (7).

7. The apparatus according to any of the foregoing claims, **characterised in that** the torsion spring (9) is fixed on an inner surface (2a) or on an outer surface (2b) of the upright (2).

8. The apparatus according to any of the foregoing claims, **characterised in that** the winding core (10) is rotatably fixed on the slide (5), the tape (11) having an end (11c) fixed to the upright (2).

9. The apparatus according to any of the foregoing claims, wherein at least one torsion spring (9) is operatively associated with an idler pulley (22) engaged on the relative upright (2), for returning a connecting cable (23) having a first end connected to the slide (5), and a second end (23b) operatively connected to the at least one torsion spring (9).

10. The apparatus according to any of the foregoing claims from 1 to 8, wherein the at least one tape torsion spring (9) also comprises an auxiliary winding core (25), having a diameter greater than that of the winding core (10), wherein the tape (11) unwound from the winding core (10) winds onto the auxiliary winding core (25).

11. The apparatus according to any of the foregoing claims from 1 to 9, wherein the tape (11) extends around the winding core (10) according to radially spaced turns, forming for example an Archimedes spiral.

12. The apparatus according to claim 10 or 11, wherein the torsion spring (9) is operatively associated with a return pulley (26) rotationally integral with the winding core (10) or with the auxiliary winding core (25) and preferably acting on a connecting cable (23) having a first end (23a) connected to the slide (5).

## Patentansprüche

1. Verbindungsvorrichtung (1) für Zugfahrzeuge, umfassend einen Rahmen (4), umfassend ein Paar Pfosten (2); ein Paar Führungen (7), die jeweils an einen jeweiligen aufrechten Pfosten (2) anschließen; ein Gleitstück (5), das die Führungen (7) entlang gleitet, um sich zumindest entlang einer im Wesentlichen vertikalen Gleitrichtung zu bewegen, wobei das Gleitstück (5) zum Verbinden mit einem Anhänger an einem Haken befestigbar ist; Arretiermittel (8), die an das Gleitstück (5) anschließen, um es entlang der Führungen (7) in einer Vielzahl von Positionen zu arretieren; **dadurch gekennzeichnet, dass** sie mindestens eine Torsionsfeder (9) umfasst, die mit dem Rahmen (4) und mit dem Gleitstück (5) verbunden ist, um das Gewicht des Gleitstücks (5) auszubalancieren, wobei die Torsionsfeder (9) einen Aufwickelkern (10) und ein um den Aufwickelkern (10) gewickeltes Band (11) umfasst, wobei
das Band (11) vom Aufwickelkern (10) abgewickelt werden kann, um das Gleitstück (5) mit einer im Wesentlichen konstanten elastischen Rückzugskraft festzuhalten.

2. Vorrichtung (1) nach dem vorangehenden Anspruch, **dadurch gekennzeichnet, dass** das Band (11) eine Innenfläche (11a) und gegenüber der Innenfläche eine Außenfläche (11b) aufweist, wobei die Innenfläche (11a) an der Außenfläche (11b) anliegt, wenn das Band (11) auf dem Aufwickelkern (10) aufgewickelt ist.

3. Vorrichtung (1) nach einem der vorangehenden Ansprüche, **dadurch gekennzeichnet, dass** die Torsionsfeder (9) eine Abdeckung (20) umfasst, die mit dem Aufwickelkern (10), der das Band (11) enthält, verbunden ist, wenn es um den Aufwickelkern (10) gewickelt ist, wobei die Abdeckung (20) eine Öffnung (21) aufweist, die das Abwickeln des Bands (10) gestattet.

4. Vorrichtung (1) nach einem der vorangehenden Ansprüche, wobei mindestens eine der Führungen eine Nut (12) aufweist, **dadurch gekennzeichnet, dass** das in der Nut (12) abgewickelte Band (11) einer Absenkbewegung des Gleitstücks (5) folgt.

5. Vorrichtung (1) nach einem der vorangehenden Ansprüche, **dadurch gekennzeichnet, dass** sie ein Paar der Federn (9) umfasst, wobei jede Torsionsfeder (9) an eine jeweilige Führung (7) anschließt.

6. Vorrichtung nach Anspruch 5, **dadurch gekennzeichnet, dass** sie eine Vielzahl von Torsionsfedern (9) umfasst, die an eine einzige Führung (7) anschließen.

7. Vorrichtung nach einem der vorangehenden Ansprüche, **dadurch gekennzeichnet, dass** die Torsionsfeder (9) an einer Innenfläche (2a) oder an einer Außenfläche (2b) des Pfostens (2) befestigt ist.

8. Vorrichtung nach einem der vorangehenden Ansprüche, **dadurch gekennzeichnet, dass** der Aufwickelkern (10) drehbar am Gleitstück (5) befestigt ist, wobei ein Ende (11c) des Bands (11) am Pfosten (2) befestigt ist.

9. Vorrichtung nach einem der vorangehenden Ansprüche, wobei mindestens eine Torsionsfeder (9) mit einer Laufrolle (22) wirkverbunden ist, die mit dem jeweiligen Pfosten (2) in Eingriff steht, um ein Verbindungskabel (23) zurückzuführen, das ein erstes Ende aufweist, das mit dem Gleitstück (5) verbunden ist, und ein zweites Ende (23b), das mit der mindestens einen Torsionsfeder (9) wirkverbunden ist.

10. Vorrichtung nach einem der vorangehenden Ansprüche 1 bis 8, wobei die mindestens eine Bandtorsionsfeder (9) ferner einen zusätzlichen Aufwickelkern (25) umfasst, der einen Durchmesser aufweist, der größer als der des Aufwickelkerns (10) ist, wobei das vom Aufwickelkern (10) abgewickelte Band (11) auf den zusätzlichen Aufwickelkern (25) aufgewickelt wird.

11. Vorrichtung nach einem der vorangehenden Ansprüche 1 bis 9, wobei sich das Band (11) um den Aufwickelkern (10) gemäß radial beabstandeter Windungen erstreckt, die zum Beispiel eine archimedische Spirale bilden.

12. Vorrichtung nach Anspruch 10 oder 11, wobei die Torsionsfeder (9) mit einer Umlenkrolle (26) wirkverbunden ist, die mit dem Aufwickelkern (10) beziehungsweise mit dem zusätzlichen Aufwickelkern (25) drehbar integral ist und vorzugsweise auf ein Verbindungskabel (23) einwirkt, das ein erstes Ende (23a) aufweist, das mit dem Gleitstück (5) verbunden ist.

## Revendications

1. Dispositif de liaison (1) pour véhicules tracteurs, comprenant un châssis (4) comprenant une paire de montants (2) ; une paire de guides (7) chacun associé à un montant (2) correspondant ; une glissière (5) coulissant le long des guides (7) pour se déplacer au moins le long d'une direction substantiellement verticale de coulissement, la glissière (5) étant fixable à un crochet pour accrocher une remorque ; des moyens de verrouillage (8) associés à la glissière (5) pour la verrouiller dans une pluralité de positions le long des guides (7) ; **caractérisé en ce qu'**il comprend au moins un ressort de torsion (9) relié au châssis (4) et à la glissière (5) pour équilibrer le poids de la glissière (5), dans lequel le ressort de torsion (9) comprend un noyau d'enroulement (10) et une bande (11) enroulée autour du noyau d'enroulement (10), dans lequel
la bande (11) peut être déroulée du noyau d'enroulement (10) pour retenir la glissière (5) avec une force de rappel élastique substantiellement constante.

2. Dispositif (1) selon la revendication précédente, **caractérisé en ce que** la bande (11) possède une surface intérieure (11a) et une surface extérieure (11b) opposée à la surface intérieure (11a), la surface intérieure (11a) étant en contact avec la surface extérieure (11b) lorsque la bande (11) est enroulée sur le noyau d'enroulement (10).

3. Dispositif (1) selon l'une quelconque des revendications précédentes, **caractérisé en ce que** le ressort de torsion (9) comprend un couvercle (20) relié au noyau d'enroulement (10) contenant la bande (11) lorsqu'elle est enroulée autour du noyau d'enroulement (10), le couvercle (20) ayant une ouverture (21) pour permettre le déroulement de la bande (10).

4. Dispositif (1) selon l'une quelconque des revendications précédentes, dans lequel au moins un des guides possède une rainure (12), **caractérisé en ce que** la bande (11) déroulée à l'intérieur de la rainure (12) suit un mouvement d'abaissement de la glissière (5).

5. Dispositif (1) selon l'une quelconque des revendications précédentes, **caractérisé en ce qu'**il comprend une paire desdits ressorts (9), chaque ressort de torsion (9) étant associé à un guide (7) correspondant.

6. Dispositif selon la revendication 5, **caractérisé en ce qu'**il comprend une pluralité de ressorts de torsion (9) associés à un seul guide (7).

7. Dispositif selon l'une quelconque des revendications précédentes, **caractérisé en ce que** le ressort de torsion (9) est fixé sur une surface intérieure (2a) ou sur une surface extérieure (2b) du montant (2).

8. Dispositif selon l'une quelconque des revendications précédentes, **caractérisé en ce que** le noyau d'enroulement (10) est fixé de façon rotative sur la glissière (5), la bande (11) ayant une extrémité (11c) fixée au montant (2).

9. Dispositif selon l'une quelconque des revendications précédentes, dans lequel au moins un ressort de torsion (9) est fonctionnellement associé à une poulie guide (22), se mettant en prise avec le montant (2) correspondant, pour renvoyer un câble de liaison (23) ayant une première extrémité reliée à la glissière (5) et une seconde extrémité (23b) reliée fonctionnellement à l'au moins un ressort de torsion (9).

10. Dispositif selon l'une quelconque des revendications précédentes de 1 à 8, dans lequel l'au moins un ressort de torsion à bande (9) comprend aussi un noyau d'enroulement auxiliaire (25) ayant un diamètre supérieur à celui du noyau d'enroulement (10), dans lequel la bande (11) déroulée du noyau d'enroulement (10) s'enroule sur le noyau d'enroulement auxiliaire (25).

11. Dispositif selon l'une quelconque des revendications précédentes de 1 à 9, dans lequel la bande (11) se développe autour du noyau d'enroulement (10) selon des spires radialement espacées, formant par exemple une spirale d'Archimède.

12. Dispositif selon les revendications 10 à 11, dans lequel le ressort de torsion (9) est fonctionnellement associé à une poulie de retour (26) solidaire de façon rotative au noyau d'enroulement (10) ou au noyau d'enroulement auxiliaire (25) et, de préférence, agissant sur un câble de liaison (23) ayant une première extrémité (23a) reliée à la glissière (5).
